# EUROPÄISCHE PATENTSCHRIFT

(11) **EP 0 875 777 B1**
(45) Veröffentlichungstag und Bekanntmachung des Hinweises auf die Patenterteilung: **02.01.2003**
(21) Anmeldenummer: 98105968.6
(22) Anmeldetag: 01.04.1998
(51) Int. Cl.: G02B 6/44

(54) **Kabelmuffe für Lichtwellenleiterkabel**
Cable sleeve for a fibre optic cable
Manchon de câble pour câble à guide d'ondes optiques

(30) Priorität: 30.04.1997 DE 19718477
(43) Veröffentlichungstag der Anmeldung: 04.11.1998
(73) Patentinhaber: CCS Technology, Inc., Wilmington, DE 19803 (US)
(72) Erfinder: Diermeier, Heinz, 81739 München (DE); Dotzer, Peter, 82335 Berg (DE); Mayr, Ernst, 82319 Starnberg (DE); Schröder, Günter, 82140 Esting (DE); Weber, Günther, 84508 Burgkirchen (DE)
(74) Vertreter: Sturm, Christoph, Dipl.-Ing.

(56) Entgegenhaltungen:
- DE-A- 3 843 192
- DE-A- 4 132 519
- DE-U- 9 410 568
- US-A- 4 709 980
- US-A- 5 189 724

## Beschreibung

Die Erfindung betrifft eine Kabelmuffe für Lichtwellenleiterkabel, wobei die Kabelmuffe als Flachmuffe mit einem flachen Muffenkörper ausgebildet ist, in dessen einer Seitenfläche eine kreisförmige Nut ausgebildet ist, in welche Einführungen für Lichtwellenleiterkabel tangential einmünden, und wobei ein Deckel mit Dichtung zur Abdeckung der Nut angeordnet ist.

Aus der DE-A-44 39 853 ist eine Verbindungs-, Abzweig- oder Aufteilungsmuffe für Lichtwellenleiterkabel bekannt, die für die Aufnahme, Spleißung und Aufteilung von Lichtwellenleitern geeignet ist, wobei die Möglichkeit zur Ablage von Überlängen von Lichtwellenleitern mit Spleißkassetten gegeben ist. Diese Anordnungen werden zum Beispiel in zylindrischen Kabelmuffengehäusen untergebracht, die aus einem Muffenrohr und stirnseitigen Dichtungskörpern bestehen oder die als Haubenmuffen ausgebildet sind. Derartige Muffengehäuse eignen sich jedoch nicht für den Einsatz bei Lichtwellenleiterkabelanlagen, die in festen Untergründen wie zum Beispiel in einem Straßenbelag verlegt sind, da der Aufwand zur Einbringung zu groß ist. Hier werden bisher sogenannte Unterflurbehälter eingesetzt. Bei der Verlegung von Mikrokabeln aus einem Rohr und darin lose eingebrachten Lichtwellenleitern in eingefrästen Nuten von festen Verlegegründen, wie Straßen oder dergleichen, ist der Einsatz von herkömmlichen Kabelmuffen unvorteilhaft, da hier große Aushübe im Verlegegrund vorgenommen werden müssen. Außerdem werden solche Lichtwellenleiterkabelsysteme in geringen Tiefen verlegt, so daß zur Einführung der Kabel in die bisher tiefer liegenden Kabelmuffen zusätzliche Maßnahmen getroffen werden müssen.

Aus der US 5 189 724 A ist eine wie eingangs beschriebene Kabelmuffe bekannt.

Aufgabe der Erfindung ist nun, eine Kabelmuffe der eingangs genannten Art zu schaffen, die in relativ geringer Tiefe in den festen Verlegegrund eingebracht werden kann und in der die Erfordernisse für die Spleißung von Lichtwellenleitern und die Ablage von Lichtwellenleiterüberlängen, für die Verzweigung und die Aufteilung erfüllt werden. Die gestellte Aufgabe wird mit einer Kabelmuffe für Lichtwellenleiterkabel mit den Merkmalen im Anspruch 1 gelöst. Vorteilhafte Weiterbildungen der Erfindung sind in den abhängigen Ansprüchen beschrieben.

Ein Vorteil ergibt sich bei der Verwendung der erfindungsgemäßen Kabelmuffe dadurch, daß sie aufgrund der flachen Bauweise in sehr geringen Tiefen, insbesondere in der geringen Verlegetiefe der im festen Verlegegrund geführten Lichtwellenleiterkabel wie Mikrokabel in einfacher Weise eingesetzt werden kann. Diese Mikrokabelsysteme verlaufen in Verlegenuten vorzugsweise in einer Tiefe etwa 30 mm, so daß die Einführungen in dieser flachen Kabelmuffe in gleicher Tiefe erfolgen kann. Die erfindungsgemäße Kabelmuffe kann als Scheibe oder auch als Ring ausgeführt sein, in der bzw. dem kreisrunde Nuten eingeformt sind. An diese Nuten schließen sich tangential Einführungen, so daß die Lichtwellenleiter nach Entfernung des Kabelmantels bzw. des Rohres in der gleichen Ebene weitergeführt werden können. Ein weiterer Vorteil ist, daß in den Nuten der Kabelmuffe gemäß der Erfindung die Lichtwellenleiter geführt, die Spleiße abgelegt und außerdem die Lichtwellenleiter von ungeschnittenen und/oder angeschnittenen Lichtwellenleiterkabeln, Überlängen von Lichtwellenleitern und Reserveadern ohne weiteren Zusatz eingebracht werden können. Dadurch entfällt somit die aufwendige Aufteilung auf entsprechende Lichtwellenleiterkassetten, wie es bei bisherigen Systemen der Fall ist. Dabei ist die Übersichtlichkeit aufgrund der flachen Bauweise völlig ausreichend. In den tangentialen Einführungen werden jeweils die Kabelmäntel bzw. die Rohre der Mikrokabel abgefangen, wobei die zugehörigen Zugentlastungen vorzugsweise als Klemmbereiche ausgebildet sind. Die Klemmung der Kabelmäntel bzw. der Rohre erfolgt entweder durch separate Klemmdeckel oder durch einen die gesamte Muffe überdeckenden, Deckel. Vorzugsweise werden an die Kabelmuffe vier Einführungen vorgesehen; wobei jeweils zwei in einer Tangentenlinie liegen. Es sind jedoch auch zusätzliche Einführungen mit entsprechenden Anschlußstutzen möglich, wobei dann entsprechende Anschlußstutzen vorgesehen oder nachträglich angebracht werden können. Die Kabelmuffe gemäß der Erfindung kann als Scheibe wie auch als Ring ausgebildet sein, wobei letztgenannte Ausführung besonders von Vorteil ist, wenn bei der Herstellung der Verlegenuten für die Mikrokabel bereits bei der Verlegung ringförmige Nuten für später einzusetzende Kabelmuffen der erfindungsgemäßen Art mit eingefräst werden.

Die weiteren Vorteile der Kabelmuffe gemäß der Erfindung werden nun anhand von sechs Figuren näher erläutert.
- Figur 1: zeigt die Ausbildung einer ringförmigen Kabelmuffe.
- Figur 2: zeigt die Ausbildung einer ringförmigen Kabelmuffe mit einer zusätzlichen 8-förmigen Diagonalnut.
- Figur 3: zeigt die Ausbildung einer ringförmigen Nut für die Aufnahme einer Kabelmuffe beim Verlegevorgang.
- Figur 4: zeigt eine Kabelmuffe in waagerechter Anordnung im Verlegegrund mit der Ausbildung einer zusätzlichen Einführung.
- Figur 5: zeigt den senkrechten Einsatz einer Kabelmuffe.
- Figur 6: zeigt einen nagetiersicheren Schutz für eine ringförmige Kabelmuffe.

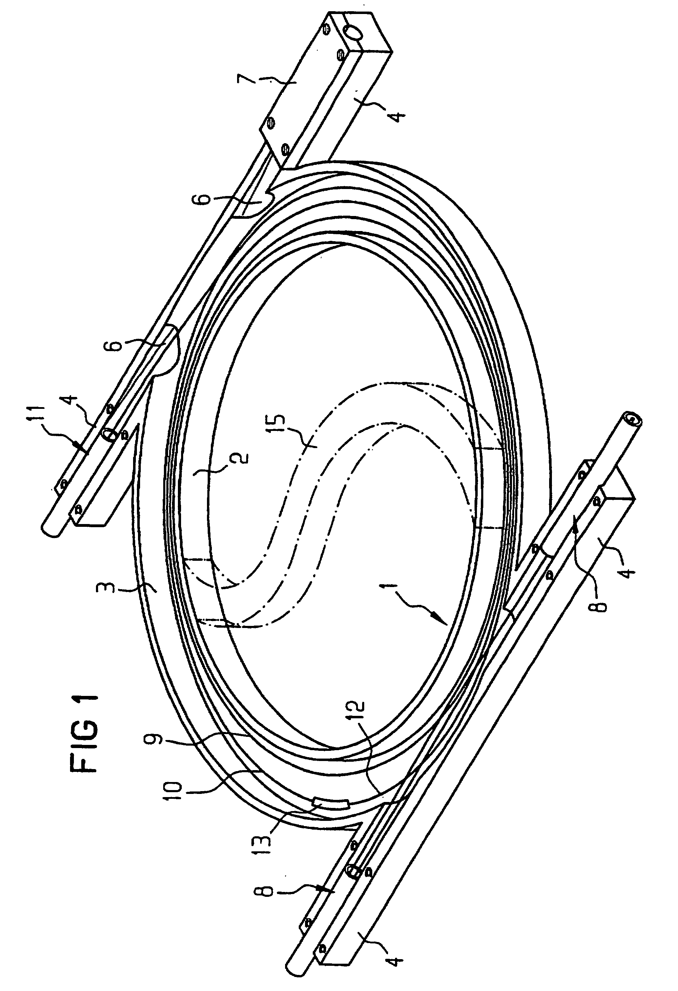

Figur 1 zeigt ein Ausführungsbeispiel der erfindungsgemäßen Kabelmuffe in Form einer Flachmuffe, wobei hier eine ringförmige Ausbildung gewählt ist. Desgleichen könnte diese Flachmuffe auch als Scheibe ausgebildet sein, in der die kreisförmigen Nuten eingeformt sind. Bei der dargestellten Flachmuffe 1 verlaufen die Nuten 3 im Ring 2, an den tangential Kabeleinführungen 4 angesetzt sind. Hier sind jeweils zwei Einführungen 4 in einer Tangentenlinie angeordnet, so daß beispielsweise auch eine geradlinige Weiterführung ohne Spleißung möglich ist. In den Einführungen 4 werden die eingeführten Kabelmäntel bzw. bei Mikrokabeln die Rohre abgefangen und zwar vorzugsweise in einer Klemmnut, die dem Durchmesser des eingeführten Kabels entsprechend angepaßt ist oder wird. In der Darstellung ist beispielsweise ein "angeschnittenes" Mikrokabel 8 eingeführt, dessen Rohr in der benötigten Länge abgenommen ist, zum Beispiel mit einem speziellen Entfernungswerkzeug, mit dem das Rohr entlang der Mantellinien ausgefräst wird. Bei diesem angeschnittenen Mikrokabel 8 werden ungeschnittene Lichtwellenleiter 9 nach Umlauf in der Nut 3 durch die gegenüber liegende Einführung 4 wieder ins weiterlaufende Mikrokabel ausgeführt, während ein Teil der Lichtwellenleiter mit den Lichtwellenleitern des Abzweigkabels 11 gespleißt wird, wobei z.B. der angespleißte Lichtwellenleiter 12 über den Spleiß 13 mit dem Lichtwellenleiter 10 des Abzweigkabels 11 verbunden und zu diesem über den Einschnitt (Ausbruch) 6 geführt wird. Die Einführungen 4 werden in diesem Fall mit separaten Klemmdeckeln 7 abgedeckt, durch die die Erfordernisse der Klemmung und der Dichtung hergestellt werden. Es können jedoch die Klemmbereiche auch von einem, die gesamte Muffe überdeckenden Deckel abgeschlossen werden. Nun ist weiterhin gezeig, daß innerhalb des Ringes 2 eine verbindende S-förmige Diagonalnut 15 vorhanden ist, in der ebenfalls Lichtwellenleiter geführt werden können. Dies hat den Vorteil, daß durch diese Führung in der S-förmigen Diagonale eine Richtungsumkehr erfolgen kann, so daß Lichtwellenleiter zum Beispiel auch zu der rechts oben liegenden Einführung 4 ohne Probleme geführt werden können.

Diese Ausgestaltung kann auch als Scheibe ausgeführt werden, wobei dann die Nuten in der gleichen Weise im Scheibenkörper verlaufen.

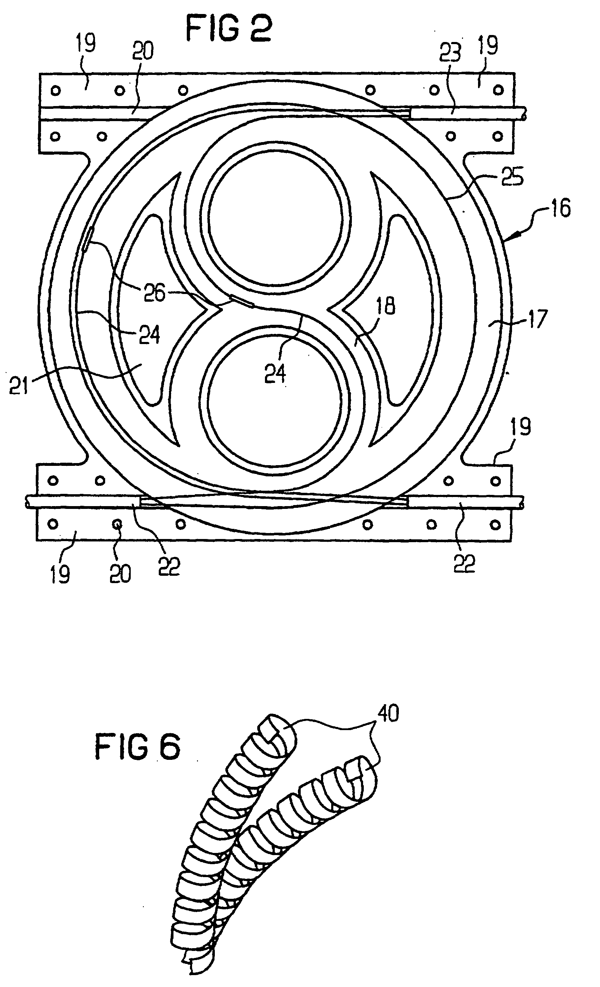

In Figur 2 wird als Ausführungsbeispiel eine Flachmuffe 16 gezeigt, bei der die kreisförmige Nut ebenfalls in einem Ring verläuft, wobei jedoch innerhalb des Ringes die S-förmige Diagonalnut zu einer 8-förmigen Diagonalnut 18 ergänzt ist. Hierdurch ergeben sich Möglichkeiten zur Richtungsumkehr von Lichtwellenleiterführungen in jeder Richtung. Bei einer ringförmigen Ausführung ergeben sich dann Segmentausschnitte 21, die bei einer scheibenförmigen Ausführung entfallen. Hier sind ebenfalls tangential angeformte Einführungen 19 vorgesehen, in deren Klemmbereichen die Kabelmäntel von Lichtwellenleiterkabeln bzw. die Rohre von Mikrokabeln 22 klemmend abgefangen werden. In Bohrungen 20 greifen entsprechende Klemmelemente wie Schrauben oder dergleichen ein. Es sind auch hier wieder fortlaufende und ungeschnittene Lichtwellenleiter 25 eines angeschnittenen Mikrokabels 22 im Verlauf der Nut 17 wie auch die Ablegung von Spleißen 26 innerhalb der Nut 17 bzw. der Diagonalnut 18 von geschnittenen Lichtwellenleitern 24 angedeutet. Durch die Führung des einen Lichtwellenleiters 24 in der 8-förmigen Diagonalnut 18 ist es nun möglich, daß der eine Lichtwellenleiter 24 von der linken unteren Einführung 19 aus dem Mikrokabel 22 zum Abzweigkabel 23 in der rechten oberen Einführung 19 abgezweigt werden kann. Auch hier sind Teilabdeckungen oder eine Gesamtabdeckung der Nuten möglich.

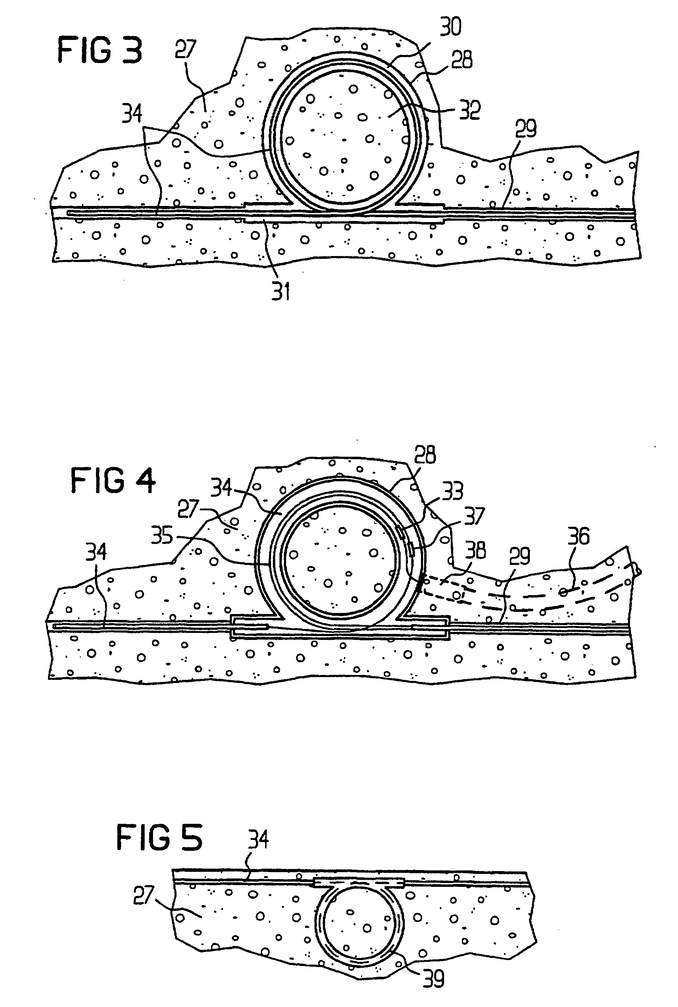

In Figur 3 ist die Verlegung eines Mikrokabels 34 innerhalb einer Verlegenut 29 eines festen. Verlege grundes 27 im Schnitt von oben dargestellt. So ist hier vorsorglich für den späteren Einsatz einer Kabelmuffe eine Ringnut 30 mit den Nutwandungen 28 bzw. dem Kern 32 oder eine Bohrung ohne Kern eingebracht, in die das Mikrokabel 34 bereits beim Verlegevorgang vorsorglich eingelegt wird. Die Ringnut 30 wird in den Bereichen der späteren Einführungsbereiche 31 der Kabelmuffe ebenfalls bereits auf das Muffenmaß verbreitert.

Bei Bedarf wird dann das Mikrokabel 34 aus der Ringnut 30 herausgenommen und von seinem Kabelmantel bzw. seinem Rohr befreit. In die Ringnut 30 oder in die vorbereitete Bohrung wird eine ringförmige Flachmuffe eingefügt und die freigelegten Lichtwellenleiter in die kreisförmige Nut der Flachmuffe nach entsprechender Spleißung eingelegt, wie oben bereits beschrieben ist.

Die Figur 4 zeigt den Endzustand der in Figur 3 bereits geschilderten Muffeneinfügung. So sind in der Nut 34 der Flachmuffe bereits die Lichtwellenleiter 35 und die Spleiße 33 und 37 eingelegt. Weiterhin ist nun hier auch eine weitere Variante gezeigt, bei der zusätzlich zu den angeformten Einführungen der Flachmuffe eine weitere Einführung für ein Kabel 36 angeordnet wurde. Hierfür ist eine Öffnung zur Nut 34 in der Flachmuffe eingebracht worden oder bereits vorgesehen, in der ein Anschlußstutzen 38 eingesetzt worden ist. In der gleichen Art können auch Erdungsdurchführungen oder sonstige Einführungen für verschiedenste Zwecke vorgesehen werden.

Figur 5 verdeutlicht, daß eine Flachmuffe 39 eines Mikrokabelsystems 34 nicht nur wie in den Figuren 3 und 4 waagerecht sondern auch senkrecht in den festen Verlegegrund eingebracht werden kann. Dies ist dann von Vorteil, wenn seitlich wenig Platz zur Verfügung steht oder wenn die Flachmuffe gegen besonders hohe Belastungen geschützt werden soll.

Figur 6 zeigt schließlich einen spiralförmigen Schutzschlauch als Nagetierschutz für die ringförmigen Flachmuffen der Verbindung, die um die Flachmuffe herumgewickelt werden.

Die Kabelmuffen gemäß der Erfindung können auch bei Luftkabelanlagen in vorteilhafter Weise eingesetzt werden, da beispielsweise zwei in einer Tangentenlinie liegende Einführungen zur Anklemmung an ein Tragseil oder ein Erdseil einer Hochspannungsanlage als Anklemmvorrichtung verwendet werden können. So kann also für größere Längen oder bei Defekt eines angelaschten Lichtwellenleiterluftkabels eine Spleißung in einfacher und unkomplizierter Weise vorgenommen werden, zumal es sich bei den Ausführungen gemäß der Erfindung um sehr montagefreundliche Muffen handelt. Auch eine Mastanordnung ist in einfacher Weise durch die Klemmvorrichtungen ermöglicht.

Ein Einsatzgebiet dieser Flachmuffe ist in Bürogebäuden gegeben,wo sie z.B. als Etagenverteiler oder Aufteilungsmuffe auf Grund ihrer flachen Bauweise in Fehlböden angeordnet werden kann.

Bei den Flachmufen gemäß der Erfindung können auch Hilfen zum Öffnen des Deckels bzw. der Abdeckungen vorgesehen werden, zum Beispiel mittels Ösen oder Ansätze für mechanisches Öffnen. Es kann jedoch auch eine pneumatische Öffnung erfolgen, wenn z.B. über eine Druckzuführung innerhalb der Flachmuffe ein Überdruck erzeugt wird, so daß der Deckel bzw. die Abdeckungen dadurch abgehoben werden.

Die Flachmuffen gemäß der Erfindung bestehen aus korrosionsfestem Material, vorzugsweise aus Metall, Metallguß, Kunststoff oder glasfaserverstärktem Kunststoff.

Die Flachmuffe gemäß der Erfindung wird als Verbindungs- und Abzweigmuffe eingesetzt und es können in ihr mindestens 200 Fasern bzw. Lichtwellenleiter geschnitten und/oder ungeschnitten abgelegt werden. In den gleichzeitig als Zugentlastung ausgebildeten Einführungen können auch gleichzeitig Erddurchverbindungen vorgenommen werden. Die an sich bekannten Spleißungsarten wie Crimpspleißung, Schrumpfschlauchspleißung und vorzugsweise Techni-Tubes können zum Schutz der Spleiße ebenfalls verwendet werden.

Die bevorzugten Maße, die jedoch nicht zwingend vorgegeben sind, bei der Verlegung im Zusammenhang mit Mikrokabelsystemen sind wie folgt:
- innerer Durchmesser einer kreisförmigen Verlegenut im Verlegegrund 150 - 300 mm
- Nutbreite einer Verlegenut im Verlegegrund 30 mm
- Nuttiefe einer Verlegenut im Verlegegrund 30 mm
- Länge der Aussparung der Verlegenut für die Aufnahme der Einführungen der Kabelmuffe 250 mm
- Nutbreite der Flachmuffe 20 bis 25 mm
- Nuttiefe der Flachmuffe ca. 10 mm
- Länge des Einführungsbereiches von zwei Einführungen 240 mm

Außerdem können die Nuten der erfindungsgemäßen Flachmuffe auch mit geeigneten, an sich in der Kabelgarniturentechnik bekannten Füllmassen aufgefüllt werden, die über entsprechende Einfüllöffnungen eingepreßt werden.

## Patentansprüche

1. Kabelmuffe für Lichtwellenleiterkabel, wobei die Kabelmuffe als Flachmuffe (1) mit einem flachen Muffenkörper ausgebildet ist, in dessen einer Seitenfläche eine kreisförmige Nut (3) ausgebildet ist, in welche Einführungen (4) für Lichtwellenleiterkabel (8, 11) tangential einmünden, und wobei ein Deckel mit Dichtung zur Abdeckung der Nut angeordnet ist, **dadurch gekennzeichnet, daß** Zugentlastungen in den Einführungen (4) angeordnet sind und daß eine S-förmige Diagonalnut (15) im Kreis der Nut (3) zur Richtungsumkehr der Lichtwellenleiterführung vorgesehen ist.

2. Kabelmuffe nach Anspruch 1,
**dadurch gekennzeichnet,**
**daß** die Flachmuffe als kreisrunde Scheibe ausgebildet ist, in der die Nut verläuft.

3. Kabelmuffe nach Anspruch 1,
**dadurch gekennzeichnet,**
**daß** die Flachmuffe (1) als Ring (2) ausgebildet ist, in dem die Nut (3) verläuft.

4. Kabelmuffe nach einem der vorhergehenden Ansprüche,
**dadurch gekennzeichnet,**
**daß** der Innenradius der kreisförmigen Nut (3) mindestens dem minimal zulässigen Biegeradius der Lichtwellenleiter (8, 11) entspricht und vorzugsweise 150 bis 300 mm beträgt.

5. Kabelmuffe nach einem der vorhergehenden Ansprüche,
**dadurch gekennzeichnet,**
**daß** die Nuttiefe 10 mm beträgt.

6. Kabelmuffe nach einem der vorhergehenden Ansprüche,
**dadurch gekennzeichnet,**
**daß** die Nutbreite der Flachmuffe (1) 20 bis 25 mm beträgt.

7. Kabelmuffe nach einem der vorhergehenden Ansprüche,
**dadurch gekennzeichnet,**
**daß** die Zugentlastungen in den Einführungen (4) als Klemmnut für den Kabelmantel des einzuführenden Lichtwellenleiterkabels (8, 11), vorzugsweise für das Rohr eines Mikrokabels, ausgebildet ist.

8. Kabelmuffe nach einem der Ansprüche 1 bis 7,
**dadurch gekennzeichnet,**
**daß** die S-förmige Diagonalnut zu einer 8-förmigen Diagonalnut (18) im Kreis der Nut ergänzt ist.

9. Kabelmuffe nach einem der vorhergehenden Ansprüche,
**dadurch gekennzeichnet,**
**daß** Lichtwellenleiterspleiße innerhalb der Nut (3) abgelegt sind.

10. Kabelmuffe nach einem der vorhergehenden Ansprüche,
**dadurch gekennzeichnet,**
**daß** die Nut (3) über eine Füllöffnung mit Füllmasse auffüllbar ist.

11. Kabelmuffe nach einem der vorhergehenden Ansprüche,
**dadurch gekennzeichnet,**
**daß** vier Einführungen (4) tangential über Einmündungen an der kreisförmigen Nut (3) angeordnet sind, wobei vorzugsweise je zwei Einführungen (4) in einer Tangentenlinie gegeneinander gerichtet angeordnet sind.

12. Kabelmuffe nach einem der vorhergehenden Ansprüche,
**dadurch gekennzeichnet,**
**daß** die Kabelmuffe in die Nut führende Anschlußstutzen für die Einführung weiterer Kabel aufweist.

13. Kabelmuffe nach einem der vorhergehenden Ansprüche,
**dadurch gekennzeichnet,**
**daß** Erdungsdurchführungen angeordnet sind.

14. Kabelmuffe nach einem der vorhergehenden Ansprüche,
**dadurch gekennzeichnet,**
**daß** der Deckel Hilfsmittel, vorzugsweise Haken und/oder Ösen zum Öffnen aufweist.

15. Kabelmuffe nach einem der Ansprüche 1 bis 13,
**dadurch gekennzeichnet,**
**daß** der Deckel mit Hilfe eines über eine Druckzuführung hergestellten Überdruckes abnehmbar ist.

16. Kabelmuffe nach einem der vorhergehenden Ansprüche,
**dadurch gekennzeichnet,**
**daß** in den Nuten (3) Überlängen von Lichtwellenleitern, ungeschnittene und/oder angeschnittene Lichtwellenleiter der eingeführten Lichtwellenleiterkabel eingelegt sind.

17. Kabelmuffe nach einem der vorhergehenden Ansprüche,
**dadurch gekennzeichnet,**
**daß** die Kabelmüffe aus korrosionsfestem Material, vorzugsweise aus Metall, Metallguß, Kunststoff oder glasfaserverstärktem Kunststoff gefertigt ist.

18. Kabelmuffe nach einem der vorhergehenden Ansprüche,
**dadurch gekennzeichnet,**
**daß** die Kabelmuffe mit Schutzmaterialien gegen Nagetier- oder Termitenbiß umgeben ist.

19. Kabelmuffe nach einem der vorhergehenden Ansprüche,
**dadurch gekennzeichnet,**
**daß** der Deckel den Bereich der kreisförmigen Nut (3) und der S-förmigen (15) oder 8-förmigen Nut (18) sowie die Klemmbereiche der Einführungen (4) überdeckt.

20. Kabelmuffe nach einem der Ansprüche 1 bis 18,
**dadurch gekennzeichnet,**
**daß** der Deckel den Bereich der kreisförmigen Nut (3) und der S-förmigen (15) oder 8-förmigen Nut (18) überdeckt und daß die Klemmbereiche der Einführungen (4) mit separaten Klemmdeckeln (7) abgedeckt sind.

## Claims

1. Cable sleeve for fibre-optic cables, the cable sleeve being formed as a flat sleeve (1) with a flat sleeve body, in one end face of which there is formed a circular groove (3), into which lead-ins (4) for fibre-optic cables (8, 11) tangentially open, and there being arranged a cover with a seal for covering the groove, **characterized in that** strain-relieving elements are arranged in the lead-ins (4) and **in that** an S-shaped diagonal groove (15) is provided in the circle of the groove (3) for reversing the direction in which the optical fibres are led.

2. Cable sleeve according to Claim 1, **characterized in that** the flat sleeve is formed as a circular disc, in which the groove runs.

3. Cable sleeve according to Claim 1, **characterized in that** the flat sleeve (1) is formed as a ring (2), in which the groove (3) runs.

4. Cable sleeve according to one of the preceding claims, **characterized in that** the inner radius of the circular groove (3) corresponds at least to the minimum permissible bending radius of the optical fibres (8, 11) and is preferably 150 to 300 mm.

5. Cable sleeve according to one of the preceding claims, **characterized in that** the groove depth is 10 mm.

6. Cable sleeve according to one of the preceding claims, **characterized in that** the groove width of the flat cable (1) is 20 to 25 mm.

7. Cable sleeve according to one of the preceding claims, **characterized in that** the strain relieving elements in the lead-ins (4) are formed as clamping grooves for the cable jacket of the fibre-optic cable (8, 11) to be introduced, preferably for the tube of a micro-cable.

8. Cable sleeve according to one of Claims 1 to 7, **characterized in that** the S-shaped diagonal groove is supplemented to form an 8-shaped diagonal groove (18) in the circle of the groove.

9. Cable sleeve according to one of the preceding claims, **characterized in that** optical-fibre splices are deposited within the groove (3).

10. Cable sleeve according to one of the preceding claims, **characterized in that** the groove (3) can be filled with filling compound via a filling opening.

11. Cable sleeve according to one of the preceding claims, **characterized in that** four lead-ins (4) are arranged tangentially via entry openings on the circular groove (3), with pairs of lead-ins (4) preferably being arranged in such a way that they are directed opposite each other in a tangent line.

12. Cable sleeve according to one of the preceding claims, **characterized in that** the cable sleeve has glands leading into the groove for the leading-in of further cables.

13. Cable sleeve according to one of the preceding claims, **characterized in that** earthing bushings are arranged.

14. Cable sleeve according to one of the preceding claims, **characterized in that** the cover has auxiliary means, preferably hooks and/or eyes, for opening.

15. Cable sleeve according to one of Claims 1 to 13, **characterized in that** the cover can be removed with the aid of a positive pressure established via a pressure feed.

16. Cable sleeve according to one of the preceding claims, **characterized in that** excess lengths of optical fibres, uncut and/or cut-into optical fibres of the inserted fibre-optic cables are laid in the grooves (3).

17. Cable sleeve according to one of the preceding claims, **characterized in that** the cable sleeve is produced from anticorrosive material, preferably from metal, cast metal, plastic or glass-fibre-reinforced plastic.

18. Cable sleeve according to one of the preceding claims, **characterized in that** the cable sleeve is surrounded by protective materials against vermin or termite attack.

19. Cable sleeve according to one of the preceding claims, **characterized in that** the cover covers over the region of the circular groove (3) and the S-shaped groove (15) or 8-shaped groove (18) and also the clamping regions of the lead-ins (4).

20. Cable sleeve according to one of Claims 1 to 18, **characterized in that** the cover covers over the region of the circular groove (3) and the S-shaped groove (15) or 8-shaped groove (18) and **in that** the clamping regions of the lead-ins (4) are covered by separate clamping covers (7).

## Revendications

1. Manchon de câble pour câble à guide d'ondes optiques, dans lequel le manchon de câble se présente comme un manchon plat (1) avec un corps de manchon plat, dans une face latérale duquel est formée une rainure circulaire (3) dans laquelle débouchent tangentiellement des entrées (4) pour des câbles à guides d'ondes optiques (8, 11), et dans lequel un couvercle avec un joint d'étanchéité est disposé de façon à couvrir la rainure, **caractérisé en ce que** des décharges de traction sont disposées dans les entrées (4) et **en ce qu'**il est prévu une rainure diagonale en forme de S (15) dans le cercle de la rainure (3) pour inverser le sens du guidage du guide d'ondes optiques.

2. Manchon de câble suivant la revendication 1, **caractérisé en ce que** le manchon plat se présente sous la forme d'un disque rond, dans lequel se trouve la rainure.

3. Manchon de câble suivant la revendication 1, **caractérisé en ce que** le manchon plat (1) se présente sous la forme d'un anneau (2), dans lequel se trouve la rainure (3).

4. Manchon de câble suivant l'une quelconque des revendications précédentes, **caractérisé en ce que** le rayon intérieur de la rainure circulaire (3) correspond au moins au rayon de courbure minimal admissible des guides d'ondes optiques (8, 11) et vaut de préférence 150 à 300 mm.

5. Manchon de câble suivant l'une quelconque des revendications précédentes, **caractérisé en ce que** la profondeur de la rainure vaut 10 mm.

6. Manchon de câble suivant l'une quelconque des revendications précédentes, **caractérisé en ce que** la largeur de la rainure du manchon plat (1) vaut 20 à 25 mm.

7. Manchon de câble suivant l'une quelconque des revendications précédentes, **caractérisé en ce que** les décharges de traction dans les entrées (4) se présentent sous la forme de rainures de serrage pour la gaine de câble du câble à guide d'ondes optiques (8, 11) à introduire, de préférence pour le tube d'un microcâble.

8. Manchon de câble suivant l'une quelconque des revendications 1 à 7, **caractérisé en ce que** la rainure diagonale en forme de S est complétée en une rainure diagonale en forme de 8 (18) dans le cercle de la rainure.

9. Manchon de câble suivant l'une quelconque des revendications précédentes, **caractérisé en ce que** des épissures du guide d'ondes optiques sont placées à l'intérieur de la rainure (3).

10. Manchon de câble suivant l'une quelconque des revendications précédentes, **caractérisé en ce que** la rainure (3) peut être remplie de masse de remplissage par une ouverture de remplissage.

11. Manchon de câble suivant l'une quelconque des revendications précédentes, **caractérisé en ce que** quatre entrées (4) sont disposées tangentiellement par des embouchures dans la rainure circulaire (3), dans lesquelles de préférence deux entrées (4) sont chaque fois disposées en étant orientées l'une vers l'autre sur une ligne tangente.

12. Manchon de câble suivant l'une quelconque des revendications précédentes, **caractérisé en ce que** le manchon de câble présente des tubulures de raccordement menant dans la rainure pour l'introduction d'autres câbles.

13. Manchon de câble suivant l'une quelconque des revendications précédentes, **caractérisé en ce qu'**il comporte des passages de mise à la terre.

14. Manchon de câble suivant l'une quelconque des revendications précédentes, **caractérisé en ce que** le couvercle présente des accessoires, de préférence des crochets et/ou des oreilles pour l'ouverture.

15. Manchon de câble suivant l'une quelconque des revendications 1 à 13, **caractérisé en ce que** le couvercle peut être enlevé à l'aide d'une surpression établie par une arrivée de pression.

16. Manchon de câble suivant l'une quelconque des revendications précédentes, **caractérisé en ce que** des surlongueurs de guides d'ondes optiques, des guides d'ondes optiques non coupés et/ou coupés à longueur, des câbles à guide d'ondes optiques introduits sont déposés dans les rainures (3).

17. Manchon de câble suivant l'une quelconque des revendications précédentes, **caractérisé en ce que** le manchon de câble est fabriqué en une matière résistant à la corrosion, de préférence en métal, métal moulé, plastique ou plastique renforcé de fibres de verre.

18. Manchon de câble suivant l'une quelconque des revendications précédentes, **caractérisé en ce que** le manchon de câble est entouré de matières de protection contre l'attaque des rongeurs ou des termites.

19. Manchon de câble suivant l'une quelconque des revendications précédentes, **caractérisé en ce que** le couvercle recouvre la région de la rainure circulaire (3) et de la rainure en forme de S (15) ou en forme de 8 (18), ainsi que les régions de serrage des entrées (4).

20. Manchon de câble suivant l'une quelconque des revendications 1 à 18, **caractérisé en ce que** le couvercle recouvre la région de la rainure circulaire (3) et des rainures en forme de S (15) ou en forme de 8 (18) et **en ce que** les régions de serrage des entrées (4) sont recouvertes par des couvercles de serrage distincts (7).
